# EUROPEAN PATENT SPECIFICATION

(11) **EP 4 339 593 B1**
(45) Date of publication and mention of the grant of the patent: **23.04.2025**
(21) Application number: 23188055.0
(22) Date of filing: 27.07.2023
(51) Int. Cl.: G01N 17/00, G06N 20/00

(54) **CORROSION DAMAGE ESTIMATION**
SCHÄTZUNG VON KORROSIONSSCHÄDEN
ESTIMATION DE DOMMAGES DE CORROSION

(30) Priority: 13.09.2022 US 202217943632
(43) Date of publication of application: 20.03.2024
(60) Divisional application: 25164266.6
(73) Proprietor: The Boeing Company, Arlington, VA 22202 (US)
(72) Inventor: THOMPSON, Richard Joel, Arlington, 22202 (US); SMITH, Tyler Benjamin, Arlington, 22202 (US); NGUYEN, Nam Hoang, Arlington, 22202 (US); LATHROP, Jason Robert, Arlington, 22202 (US); WILLIAMS, Kristen Smith, Arlington, 22202 (US); HUANG, Hsien-Lin, Arlington, 22202 (US); BARWICK, Wilbur Harrison, Arlington, 22202 (US)
(74) Representative: Carrie, Rosemary Louise Hunter

(56) References cited:
- US-A1- 2022 164 681

## Description

### TECHNOLOGICAL FIELD

The present disclosure relates generally to the field of corrosion estimation and, more specifically, to a nonlinear regression tool for estimating corrosion damage.

### BACKGROUND

Corrosion is a major factor for determining the overall lifetime and maintenance schedule of a vehicle. There are numerous different types of corrosion including but not limited to galvanic, crevice, erosion, and filiform. Galvanic corrosion occurs when two dissimilar materials are placed in contact and a differential in voltages across them drives a small current flow. Crevice corrosion occurs to metal surfaces where a stagnant solution remains in contact. Erosion occurs from external forces such as sand or other debris moves against the metal surface. Filiform corrosion is the interaction between a coating and a base metal. Pitting occurs when cavities are produced in a material. Each of these forms of corrosion can be influenced by environmental conditions.

The effects of corrosion are analyzed during the initial design of a vehicle. Current analysis relies heavily on the expertise of the designers and utilizes their previous experiences in vehicle design, subjective decision making, and tribal knowledge. Unfortunately, many designers do not have the necessary expertise that is obtained through extensive training and work experience.

One design method analyzes the effect of corrosion after fully designing the vehicle. After the design is complete, corrosion damage rates and features are ascertained through testing. However, the testing is expensive and can be labor intensive. Further, issues that are discovered during the testing require design changes which are expensive to implement after the design of the vehicle is complete.

Several efforts have explored modeling to predict corrosion damage in lieu of testing. However, due to the complex physics of corrosion behavior and the long duration required for corrosion to transpire for measurement and comparison, modeling approaches have frequently been very limited in capability, and remain a research activity. Some current modeling approaches are based on a diffusion process and do not capture the complicated interaction with various elements in base alloys and chemicals in the coating. Other existing modeling approaches can be very computationally expensive and require significant resources for a single calculation. Computational models are notoriously difficult to predict and for which data is often scarce. The complex physics involved necessitates computationally expensive first-principles modeling, which can take lengthy time frames for a single solution. This can also require a large amount of data that may not be available early in the conceptual design of a new design. Empirical models have also been developed, but require substantial and expensive testing to construct, and may take very long periods of time to compare and validate due to the typical time scale for corrosion damage to transpire.

US2022164681A1, according to its abstract, states that an information handling system receives data from a sensor and an Internet-of-Things (IoT) device, and trains a machine learning model based on the data. The system also predicts an outcome that includes a future corrosion level of the information handling system using the trained machine learning model, and determines whether to move a virtual machine hosted in the information handling system to another information handling system based on the future corrosion level of the information handling system and another future corrosion level of the other information handling system.

### SUMMARY

According to a first aspect, there is provided a computer-implemented method of estimating corrosion of a material of a vehicle as recited in claim 1. According to a second aspect, there is provided a computer readable medium as recited in claim 13. Optional features of aspects are set out in the dependent claims.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is a flowchart diagram of a method of estimating corrosion of a material.
Figure 2 is a flowchart diagram of a method of obtaining data.
Figure 3 is a schematic diagram of pipelines for gathering data from different sources.
Figure 4 is a flowchart diagram of a method of generating a trained data model.
Figure 5 is a flowchart diagram of a method of determining a corrosion estimate.
Figure 6 is a graphic user interface of an input display for a user to enter one or more parameters.
Figure 7 is a graphical user interface of an output display to display parameters to a user.
Figure 8 is a schematic diagram of a computing device.

### DETAILED DESCRIPTION

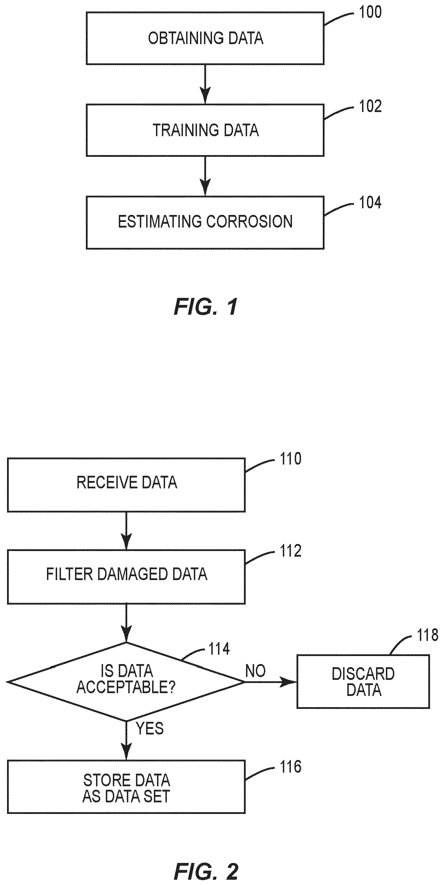

Figure 1 illustrates an overview of a method of estimating corrosion. The method includes obtaining data regarding corrosion (block 100). The data is obtained from various sources, such as but not limited to sensors and observational data. The data is then trained to provide for a more data points unrelated to the one or more environmental parameters; determining a distance between the remaining data points and the one or more environmental parameters; selecting a group of the remaining data points that are nearest to the one or more environmental parameters; based on the group of the remaining data points, determining a corrosion estimate; and transmitting an output display to the user device.

In another aspect, the method further comprises applying KNN nonlinear regression and determining the distance between the remaining data points and the one or more environmental parameters.

In another aspect, the method further comprises normalizing distances between the remaining data points.

In another aspect, the method further comprises determining a confidence level of the corrosion estimate based on the normalized distances.

In another aspect, the method further comprises determining a corrosion mass loss rate.

In another aspect, determining the additional data points comprises: selecting one of the data points; obtaining the environmental conditions from the date and time when the corrosion data was observed; and interpolating the data point and the one or more environmental conditions and generating the additional data points.

In another aspect, the data points comprise sensor data and observational data and determining the additional data points using just the sensor data.

One aspect is directed to a (optionally, non-transitory) computer readable medium comprising instructions stored thereon that, when executed by processing circuitry of a computing device, configured the computing device to: obtain corrosion data comprising a plurality of data points; generate additional data points based on the data points and additional data obtained from one or more remote sources; aggregate the data points and the additional data points into a trained data model; receiving an input of one or more environmental parameters; filtering the trained data model and removing the data points unrelated to the one or more environmental parameters; apply KNN nonlinear regression and determine a set of the data points from the filtered trained data model that are closest to the one or more environmental parameters; and determine a corrosion estimate for the material based on the set of the data points from the trained data model.

In another aspect, the computing device is further configured to normalize the filtered data points to equally weight the data points related to the one or more environmental parameters.

In another aspect, the computing device is further configured to determine a confidence level of the corrosion estimate based on the normalized distances.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is a flowchart diagram of a method of estimating corrosion of a material.
Figure 2 is a flowchart diagram of a method of obtaining data.

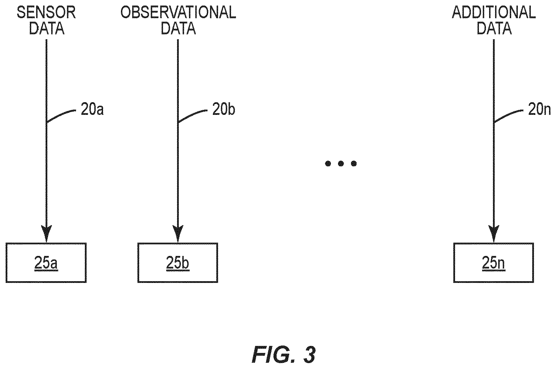

Figure 3 is a schematic diagram of pipelines for gathering data from different sources.

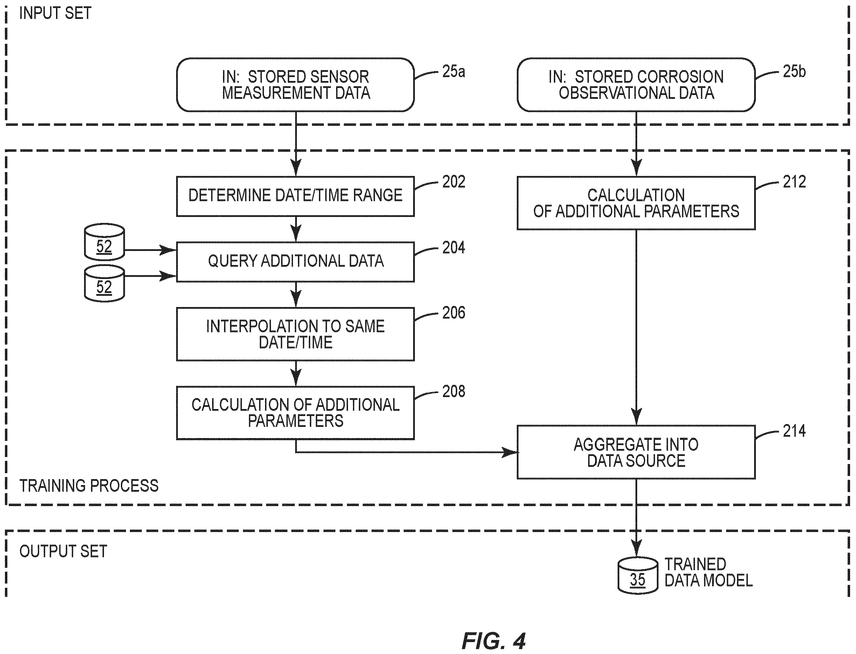

Figure 4 is a flowchart diagram of a method of generating a trained data model.

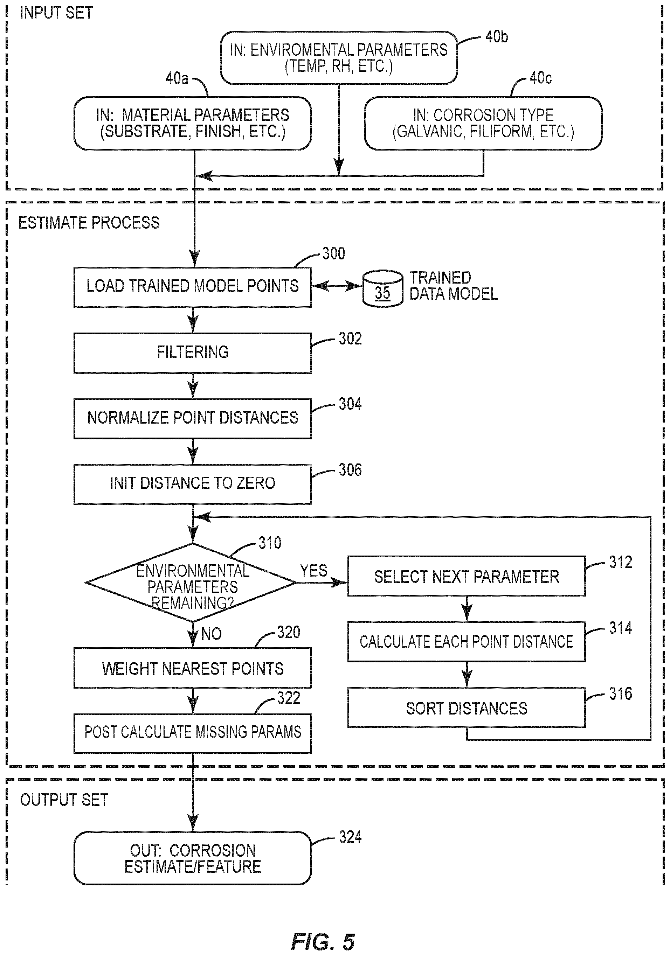

Figure 5 is a flowchart diagram of a method of determining a corrosion estimate.

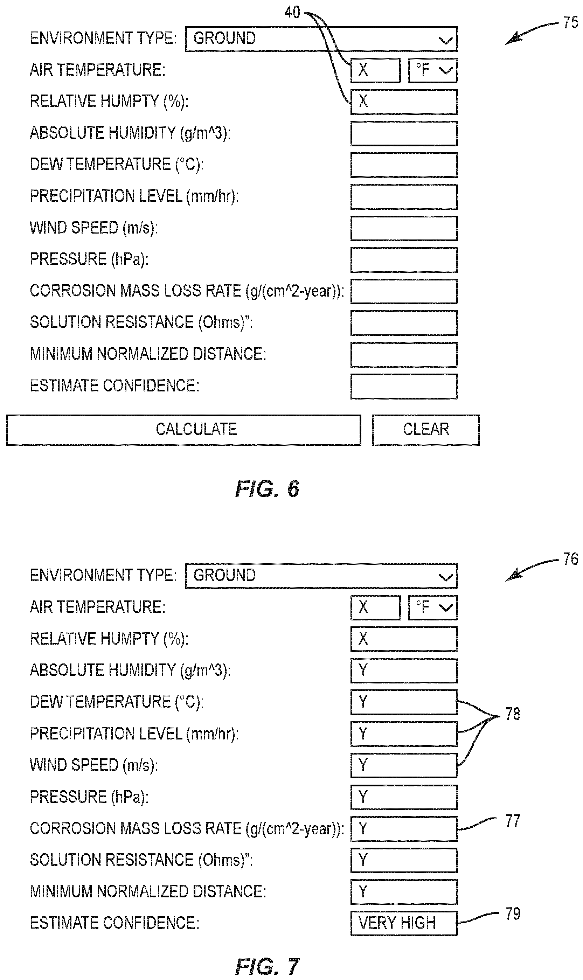

Figure 6 is a graphic user interface of an input display for a user to enter one or more parameters.
Figure 7 is a graphical user interface of an output display to display parameters to a user.

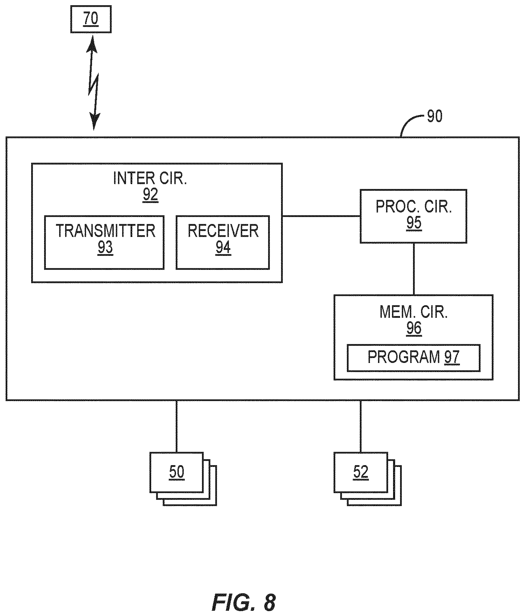

Figure 8 is a schematic diagram of a computing device.

### DETAILED DESCRIPTION

Figure 1 illustrates an overview of a method of estimating corrosion. The method includes obtaining data regarding corrosion (block 100). The data is obtained from various sources, such as but not limited to sensors and observational data. The data is then trained to provide for a more complete data set (block 102). The trained data is then used to estimate the expected amount of corrosion for a given situation (block 104).

The corrosion estimation applies to the expected effect of one or more parameters on a material. In one example, the material just includes a metal. In another example, the material includes a base metal and a finish. In another example, the material includes a base metal, a finish, and an installation interface such as a rivet.

Figure 2 illustrates one example of the steps for obtaining the data. The data comprises data points that are received from one or more sources (block 110). The sources include but are not limited to sensor data and observational data. Specific examples include sensor measurements from exposed corrosion sites, measurements from outdoor exposure and chamber tests, measurements and/or observations from decommissioned and in service aircraft, and various other new data sources that become available. Specific examples of sensors that can supply data include but are not limited to Luna Innovations L2SA sensors and Luna Innovations Acuity sensors which measure corrosion rate as well as surrounding environmental parameters.

The collected data points are filtered to remove damaged data (block 112). The filtering can be based on various factors including but not limited to data quality, conditions during testing that could adversely affect the data, and calculation checks on the sensors and/or observational equipment. The filtering removes damaged data to ensure the accuracy of the remaining data.

The method further determines whether to accept the data (block 114). The acceptance analyzes whether the data has already been trained, or if there is already enough data for a given parameter that provides for a sufficient degree of accuracy when estimating the corrosion. If the data is accepted, the data is stored and used for corrosion estimation (block 116). If not accepted, the data is discarded (block 118).

Figure 2 includes a method in which data from different sources are included in a single data pipeline and stored together as a single data set. Other methods can segregate the data dependent upon the source. Figure 3 schematically illustrates different data pipelines 20a, 20b ...20n each gathering data from different sources (e.g., exposed, chamber, on-aircraft, corrosion type). Other examples of data from various pipelines 20 include data from cabinet tests performed in lab, data from outdoor exposure testing, chemical composition data, physical material properties data stored in a database or model source. Each pipeline is analyzed as illustrated in Figure 2 and separately stored as data sets 25a, 25b, etc. for use in the corrosion determination process.

The data can be obtained as various timing frequencies. In one example, the data is continuously collected and stored. The stored data is then periodically scraped and used for analysis. Another example obtains the data on an as-needed basis.

After the data has been obtained and then stored in one or more data sets 25, the data is trained. One example of the training process is illustrated in Figure 4. The training process consumes the one or more data sets 25 from the one or more data pipelines 20 and aggregates interpolated forms of the data together into a single trained data model 35 that is used subsequently by the estimation process. In one example as illustrated in Figure 4, the training process differs based on the categorical nature of the data set 25. In this example, data sets 25 from two primary sources are used including a data set 25a of sensor measurements from exposed sites and a data set 25b of chamber/on-aircraft data.

For the sensor data set 25a, the appropriate date/time range and geographic location is associated with the data (block 202). In one example, the additional data is weather data from the time and location when the data was gathered. Other examples of additional data include but are not limited to chemical composition data, species concentration data, and physical material properties data from a different database or model sources. Additional data is gathered from one or more data sources 52 (block 204). The remote sources 52 can include various data sources including but not limited to sites available through the network (e.g., Internet), different databases, and different model sources. Examples of remote sources 52 for weather include but are not limited to the National Oceanic and Atmospheric Administration (NOAA), Integrated Surface Database (ISD), Meteorological Assimilation Data Ingest System (MADIS), PRISM, and a number of other external or internal sources to retrieve associated weather data for the same date and time range. Data sources 52 can also provide additional environmental conditions such as but not limited to other weather conditions, pollution levels, salt exposure based on closeness to an ocean, and erosion exposure. An interpolation step is performed to interpolate the additional data (block 206). The interpolation generates an estimated set of additional data. For the example of using weather sources, this includes interpolation in time from weather measurements taken near the same time to determine an estimate at the same date/time as the measurement for a data point. Additionally or alternatively, this includes geographic interpolation.

In one example, the interpolation step is supplemented with thermodynamic or physical calculations. One example includes determining an on-aircraft external temperature based on known surface ground temperature measurements.

The process generates missing or supplemental parameters (block 208). In one example, thermodynamic, chemical, or physical calculations or experimental tables or data are used to determine additional environmental parameters of interest. One example includes the calculation of the absolute humidity at the measurement point from the relative humidity, temperature, and pressure. In another example, additional parameters are determined using physical models.

The training of the observational data set 25b is different than the training of the sensor data set 25a. The training for this type of data is different because there are no further available sources 52 for correlating the measurements with additional data. Instead of using data sources 52, the process calculates supplemental values via thermodynamic or physical calculations (block 212).

After the additional data is determined for the different data sets 25a, 25b, the data is aggregated together (block 214) into a common file or database as a trained data model 35. The trained data model 35 can be in a format that provides for querying for subsequent processing.

Figure 4 includes an example with the different data sets 25 trained in different manners. In another example, the different data sets 25 are treated in a common manner. This can include the interpolation based on additional data to calculate additional parameters, or the calculation of additional parameters based on calculations. In another example, no interpolation is performed for one or more of the data sets 25.

In another example, additional sources of data are included for training. The process would be similar for each source, wherein the data pipeline would be expanded to include accepting/rejecting/filtering/storing the new source, and the training process augmented to aggregate the new source, possibly adding supplemental values and/or querying additional internal/external sources to correlate additional interpolated data to the aggregated form. Additional processing steps may be required in the training such as image analysis for photographic observations of corrosion damage.

Once the training process has been completed, the trained data model 35 provides a data source for the estimation process. The estimation process includes user input 40 of one or more parameters regarding the corrosion. Examples of user inputs 40 include but are not limited to material parameters (e.g., substrate, finish), environmental parameters (e.g., temperature, relative humidity), corrosion type (e.g., galvanic, pitting, filiform), and testing site parameters (exposed, in-flight, chamber). The number and type of user inputs 40 can vary. Figure 5 includes an example with three different types of user inputs 40: material parameters 40a; environmental parameters 40b; and corrosion type 40c. In one example, the material parameters 40a include one or more of a base metal, finish, and installation interface (e.g., rivet).

The estimation process in block 104 could be performed using any of a number of different approaches, including but not limited to learning methods such as k-Nearest Neighbors (KNN), neural networks, specialized neural networks such as convolutional neural networks (CNNs), or statistical approaches including statistical regression models, Bayesian inference statistics models, Kriging models, or other approaches. A single instance of this implementation of the estimation process in block 102 is shown in Fig. 5, wherein a k-Nearest Neighbors (KNN) approach has been used.

As illustrated in Figure 5, the data points from the trained data model 35 are used for the analysis (block 300). The data points are filtered to remove data that is not applicable to the parameters in the user input 40 (block 302). In one example, the filtering occurs for one or more of the user inputs 40. Filtering parameters include but are not limited to material, surface treatment, surface finish, and corrosion type. In one example, the filtering applies to the material parameters 40a and corrosion type 40c. It is understood that filtering can occur to various user inputs.

After filtering, distances between the user inputs 40 and the data points are measured and normalized (block 304). Normalizing the distances provides for equal weight for each of the user inputs 40 (block 304). In one example, one or more additional weighting schemes are applied when higher confidence is known in particular predictors. A baseline of the distances is set by initializing the distances (block 306).

In this example, the environmental parameters 40b are analyzed after filtering of the other user inputs 40a, 40c (block 310). For the environmental parameters 40b, the parameters are individually selected (block 312), point distances are calculated for the points (block 314), and the distances are sorted (block 316). Once the parameters have been analyzed, the nearest points are determined and weighted (block 320). In one example, the distances are computed and sorted in ascending order.

In one example, the first k points of the ascending order are selected. One or more statistical values are computed based on the selected distances (block 322). Examples include statistical values such as a mean, median, inverse-linear weighted average or other approach which is applied to calculate the desired corrosion rate or feature of interest. A corrosion estimate is output (block 324).

In one example, the feature includes an image. The process includes additional steps of image analysis to determine or predict the desired feature. The final predicted rate or feature is then published to the user. In one example, the image features of interest include predicted corrosion area, shape of area around a geometric feature or across a surface, severity of corrosion across a surface, presence/absence/amount of various features such as crevices and/or crack formation, and geometric distribution of any damage across the surface. Image features can also include a surface that includes a geometric part or component such as a rivet, bolt, hole, punch-out, coupon, seam, weld, split, join, or bonding, etc.

Figure 6 illustrates an example of an input display 75 configured for a user device 70. The input display 75 provides for a user to enter the user inputs 40. In this example, the user specifies the type of environment and any known environmental parameters. Figure 6 generically illustrates the user inputs with "x" as the input. In one example, one or more material parameters 40 are also input by the user. Unknown parameters are left blank. The estimation process then computes the resulting corrosion rate and transmits the input display 75 to the user device 70. Figure 7 illustrates an example with the calculated values shown generically as "y". The output display 76 corresponds to the input display 75 and includes the generated corrosion estimation 77 and environmental parameters 78. In one example, the corrosion estimation is one or more of a corrosion mass loss rate and a corrosion current density. In one example, the output includes a degree of corrosion that includes one or more of mass loss, corrosion area, and pit depth. The output display 76 also includes a confidence value 79 computed from the size of the normalized distances found. The confidence value 79 can be a statistical determination of the expected accuracy of the corrosion estimation 77 and based on the number of data points from the trained data model 35. The confidence value 79 is higher when based on a larger number of data points. In one example, the confidence value 79 is higher when the normalized distances away from the nearest points found are smaller. The present methodology provides for calculating additional parameters to provide for a more completed trained data model 35 to increase the confidence value of the final corrosion estimation.

In one example, the estimation method and system alleviates the challenges of previous methods by applying a nonlinear regression model to estimate the corrosion damage or expected degradation features for a particular metal or coating in a particular environment. This allows corrosion risk to be rapidly calculated much earlier in the design process to identify and avoid problematic designs and expensive design changes after manufacturing has begun.

Figure 8 illustrates a computing device 90 configured to perform the corrosion estimations. The computing device 90 can include a variety of different forms, including but not limited to a server computer, a workstation computer, a desktop computer, a smartphone, tablet computer, and a laptop computer. The computing device 90 can include one or more of each of a number of components such as, for example, processing circuitry 95 (e.g., processor unit) connected to a memory circuitry 96 (e.g., storage device).

The processing circuitry 95 may be composed of one or more processors alone or in combination with one or more memories. The processing circuitry 95 is generally computer hardware that is capable of processing information such as, for example, data, computer programs and/or other suitable electronic information. The processing circuitry 95 is composed of a collection of electronic circuits some of which may be packaged as an integrated circuit or multiple interconnected integrated circuits (an integrated circuit at times more commonly referred to as a "chip"). The processing circuitry 95 may be configured to execute computer programs 97, which may be stored onboard the processing circuitry 95 or otherwise stored in the memory circuitry 96 (of the same or another device).

The processing circuitry 95 may be a number of processors, a multi-core processor or some other type of processor, depending on the particular implementation. Further, the processing circuitry 95 may be implemented using a number of heterogeneous processor systems in which a main processor is present with one or more secondary processors on a single chip. As another illustrative example, the processing circuitry 95 may be a symmetric multi-processor system containing multiple processors of the same type. In yet another example, the processing circuitry 95 may be embodied as or otherwise include one or more ASICs, FPGAs or the like. Thus, although the processing circuitry 95 may be capable of executing a computer program 97 to perform one or more functions, the processing circuitry 95 of various examples may be capable of performing one or more functions without the aid of a computer program 97. In either instance, the processing circuitry 95 may be appropriately programmed to perform functions or operations according to example implementations of the present disclosure.

The memory circuitry 96 is generally computer hardware that is capable of storing information such as, for example, data, computer programs (e.g., computer-readable program code 97) and/or other suitable information either on a temporary basis and/or a permanent basis. The memory circuitry 96 may include volatile and/or non-volatile memory and may be fixed or removable. Examples of suitable memory circuitry 96 include random access memory (RAM), read-only memory (ROM), a hard drive, a flash memory, a thumb drive, a removable computer diskette, an optical disk, a magnetic tape or some combination of the above. Optical disks may include compact disk-read only memory (CD-ROM), compact disk-read/write (CD-R/W), DVD or the like. In various instances, the memory circuitry 96 may be referred to as a computer-readable storage medium. The computer-readable storage medium is a (optionally, non-transitory) device capable of storing information and is distinguishable from computer-readable transmission media such as electronic transitory signals capable of carrying information from one location to another. Computer-readable medium as described herein may generally refer to a computer-readable storage medium or computer-readable transmission medium.

In addition to the memory circuitry 96, the processing circuitry 95 may also be connected to one or more interfaces for displaying, transmitting and/or receiving information, such as the input and output displays 75, 76. The interfaces include a communications interface circuitry 92 configured to transmit and/or receive information, such as to and/or from the remote sources 52, user devices 70, other apparatus(es), network(s) or the like. The communications interface circuitry 92 may be configured to transmit and/or receive information by physical (wired) and/or wireless communications links. Examples of suitable communication interfaces include a network interface controller (NIC), wireless NIC (WNIC) or the like. The communications interface circuitry 92 may have one or more transmitters 93. The communications interface circuitry 92 may have one or more receivers 94.

As indicated above, program code instructions 97 may be stored in the memory circuitry 96 and executed by processing circuitry 95 that is thereby programmed, to implement functions of the systems, subsystems, tools and their respective elements described herein.

As will be appreciated, program code instructions may be loaded onto a computing device or other programmable apparatus from a computer-readable storage medium to produce a particular machine, such that the particular machine becomes a means for implementing the functions specified herein. These program code instructions may also be stored in a computer-readable storage medium that can direct a computer, a processing circuitry or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processing circuitry or other programmable apparatus to configure the computer, processing circuitry or other programmable apparatus to execute operations to be performed on or by the computer, processing circuitry or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

Execution of instructions by a processing circuitry, or storage of instructions in a computer-readable storage medium, supports combinations of operations for performing the specified functions. In this manner, a computing device 90 may include a processing circuitry 95 and a memory circuitry 96 coupled to the processing circuitry 95, where the processing circuitry 95 is configured to execute computer-readable program code 97 stored in the memory circuitry 96. It will also be understood that one or more functions, and combinations of functions, may be implemented by special purpose hardware-based computer systems and/or processing circuitry which perform the specified functions, or combinations of special purpose hardware and program code instructions.

In one example, the methods are used to determine corrosion estimates for materials on a vehicle. Vehicles include but are not limited to manned aircraft, unmanned aircraft, manned spacecraft, unmanned spacecraft, manned rotorcraft, unmanned rotorcraft, satellites, rockets, missiles, manned terrestrial vehicles, unmanned terrestrial vehicles, manned surface water borne vehicles, unmanned surface water borne vehicles, manned sub-surface water borne vehicles, unmanned sub-surface water borne vehicles, and combinations thereof. The corrosion estimation can also be used to determine corrosion for a variety of other objects and in a variety of other contexts and environments.

## Claims

1. A computer-implemented method of estimating corrosion of a material of a vehicle, the method comprising:
receiving (110) corrosion data comprising data points of measurement data (25a) and observational data (25b);
determining (202, 204, 206, 208, 212) additional data points based on the corrosion data and environmental conditions from a date and time when the corrosion data was observed;
aggregating (214) the corrosion data and the additional data into a trained data model (35);
receiving from a user device (70) a user input (40), the user input comprising one or more environmental parameters (40b);
filtering (302) the trained data model and generating remaining data points by removing the data points unrelated to the one or more environmental parameters input by the user;
determining (306) a distance between the remaining data points and the one or more environmental parameters input by the user;
selecting (312) a group of the remaining data points that are nearest to the one or more environmental parameters input by the user;
based on the group of the remaining data points, determining (104, 322) a corrosion estimate (77) of the material of the vehicle; and
transmitting (324) an output display (76) to the user device.

2. The method of claim 1, further comprising applying KNN nonlinear regression and determining the distance between the remaining data points and the one or more environmental parameters.

3. The method of claim 1 or claim 2, further comprising normalizing (304) distances between the remaining data points.

4. The method of claim 3, further comprising determining a confidence level (79) of the corrosion estimate based on the normalized distances.

5. The method of claim 4, wherein the output display comprises the confidence level.

6. The method of any preceding claim, wherein the corrosion estimate comprises a corrosion mass loss rate.

7. The method of any preceding claim, wherein the output display comprises the corrosion estimate and the one or more environmental parameters (78).

8. The method of any preceding claim, wherein the corrosion estimate comprises a corrosion current density.

9. The method of any preceding claim, wherein determining the additional data points comprises:
selecting one of the data points;
obtaining (202, 204) the environmental conditions from the date and time when the corrosion data was observed; and
interpolating (206) the data point and the environmental conditions and generating (208) the additional data points.

10. The method of any preceding claim, wherein: the data points of the corrosion data comprise sensor data (25a) and observational data (25b); and the corrosion data used in the step of determining additional data points comprises only the sensor data (25a).

11. The method of claim 10, wherein the sensor data comprises sensor measurements from exposed corrosion sites.

12. The method of any preceding claim, wherein the observational data comprises observations from decommissioned and in service aircraft.

13. A computer readable medium (96) comprising instructions stored thereon that, when executed by processing circuitry (95) of a computing device (90), cause the computing device to:
obtain (100) corrosion data comprising a plurality of data points (25);
generate additional data points based on the data points and additional data obtained from one or more remote sources (52);
aggregate (214) the data points and the additional data points into a trained data model (35);
receive a user input (40) of one or more environmental parameters (40b);
filter (302) the trained data model and removing the data points unrelated to the one or more environmental parameters input by the user;
apply KNN nonlinear regression and determine a set of the data points from the filtered trained data model (35) that are closest to the one or more environmental parameters input by the user; and
determine (104, 322) a corrosion estimate (77) for a material of a vehicle based on the set of the data points from the trained data model (35).

14. The computer readable medium of claim 13, wherein the computing device is further caused to normalize (304) the filtered data points to equally weight the data points related to the one or more environmental parameters.

15. The computer readable medium of claim 14, wherein the computing device is further caused to determine a confidence level (79) of the corrosion estimate based on the normalized distances.

## Patentansprüche

1. Computerimplementiertes Verfahren zum Schätzen von Korrosion eines Materials eines Fahrzeugs, wobei das Verfahren Folgendes umfasst:
Empfangen (110) von Korrosionsdaten, die Datenpunkte von Messdaten (25a) und Beobachtungsdaten (25b) umfassen;
Bestimmen (202, 204, 206, 208, 212) zusätzlicher Datenpunkte basierend auf den Korrosionsdaten und
Umgebungsbedingungen ab einem Datum und einer Zeit, zu der die Korrosionsdaten beobachtet wurden;
Aggregieren (214) der Korrosionsdaten und der zusätzlichen Daten zu einem trainierten Datenmodell (35);
Empfangen, von einer Benutzervorrichtung (70), einer Benutzereingabe (40), wobei die Benutzereingabe einen oder mehrere Umgebungsparameter (40b) umfasst;
Filtern (302) des trainierten Datenmodells und Erzeugen verbleibender Datenpunkte durch Entfernen der Datenpunkte, die nicht mit dem einen oder den mehreren durch den Benutzer eingegebenen Umgebungsparametern in Beziehung stehen;
Bestimmen (306) eines Abstands zwischen den verbleibenden Datenpunkten und dem einen oder den mehreren Umgebungsparametern, die durch den Benutzer eingegeben werden;
Auswählen (312) einer Gruppe der verbleibenden Datenpunkte, die dem einen oder den mehreren durch den Benutzer eingegebenen Umgebungsparametern am nächsten sind;
basierend auf der Gruppe der verbleibenden Datenpunkte, Bestimmen (104, 322) einer Korrosionsschätzung (77) des Materials des Fahrzeugs; und
Übertragen (324) einer Ausgabeanzeige (76) an die Benutzervorrichtung.

2. Verfahren nach Anspruch 1, ferner umfassend das Anwenden einer nichtlinearen KNN-Regression und Bestimmen des Abstands zwischen den verbleibenden Datenpunkten und dem einen oder den mehreren Umgebungsparametern.

3. Verfahren nach Anspruch 1 oder Anspruch 2, ferner umfassend das Normalisieren (304) von Abständen zwischen den verbleibenden Datenpunkten.

4. Verfahren nach Anspruch 3, ferner umfassend das Bestimmen eines Konfidenzniveaus (79) der Korrosionsschätzung basierend auf den normalisierten Abständen.

5. Verfahren nach Anspruch 4, wobei die Ausgabeanzeige das Konfidenzniveau umfasst.

6. Verfahren nach einem der vorhergehenden Ansprüche, wobei die Korrosionsschätzung eine Korrosionsmassenverlustrate umfasst.

7. Verfahren nach einem der vorhergehenden Ansprüche, wobei die Ausgabeanzeige die Korrosionsschätzung und den einen oder die mehreren Umgebungsparameter (78) umfasst.

8. Verfahren nach einem der vorhergehenden Ansprüche, wobei die Korrosionsschätzung eine Korrosionsstromdichte umfasst.

9. Verfahren nach einem der vorhergehenden Ansprüche, wobei das Bestimmen der zusätzlichen Datenpunkte Folgendes umfasst:
Auswählen eines der Datenpunkte;
Erhalten (202, 204) der Umgebungsbedingungen ab dem Datum und der Zeit, zu der die Korrosionsdaten beobachtet wurden; und
Interpolieren (206) des Datenpunkts und der Umgebungsbedingungen und Erzeugen (208) der zusätzlichen Datenpunkte.

10. Verfahren nach einem der vorhergehenden Ansprüche, wobei: die Datenpunkte der Korrosionsdaten Sensordaten (25a) und Beobachtungsdaten (25b) umfassen; und die Korrosionsdaten, die in dem Schritt des Bestimmens zusätzlicher Datenpunkte verwendet werden, nur die Sensordaten (25a) umfassen.

11. Verfahren nach Anspruch 10, wobei die Sensordaten Sensormessungen von exponierten Korrosionsstellen umfassen.

12. Verfahren nach einem der vorhergehenden Ansprüche, wobei die Beobachtungsdaten Beobachtungen von stillgelegten und in Dienst befindlichen Flugzeugen umfassen.

13. Computerlesbares Medium (96), das darauf gespeicherte Anweisungen umfasst, die, wenn sie durch eine Verarbeitungsschaltung (95) einer Rechenvorrichtung (90) ausgeführt werden, die Rechenvorrichtung zu Folgendem veranlassen:
Erhalten (100) von Korrosionsdaten, die mehrere Datenpunkte (25) umfassen;
Erzeugen zusätzlicher Datenpunkte basierend auf den Datenpunkten und zusätzlichen Daten, die von einer oder mehreren entfernten Quellen erhalten werden (52);
Aggregieren (214) der Datenpunkte und der zusätzlichen Datenpunkte zu einem trainierten Datenmodell (35);
Empfangen einer Benutzereingabe (40) eines oder mehrerer Umgebungsparameter (40b);
Filtern (302) des trainierten Datenmodells und Entfernen der Datenpunkte, die nicht mit dem einen oder den mehreren durch den Benutzer eingegebenen Umgebungsparametern in Beziehung stehen;
Anwenden einer nichtlinearen KNN-Regression und Bestimmen eines Satzes der Datenpunkte aus dem gefilterten trainierten Datenmodell (35), die dem einen oder den mehreren durch den Benutzer eingegebenen Umgebungsparametern am nächsten sind; und
Bestimmen (104, 322) einer Korrosionsschätzung (77) für ein Material eines Fahrzeugs basierend auf dem Satz der Datenpunkte aus dem trainierten Datenmodell (35).

14. Computerlesbares Medium nach Anspruch 13, wobei die Rechenvorrichtung ferner veranlasst wird, die gefilterten Datenpunkte zu normalisieren (304), um die Datenpunkte in Bezug auf den einen oder die mehreren Umgebungsparameter gleichermaßen zu gewichten.

15. Computerlesbares Medium nach Anspruch 14, wobei die Rechenvorrichtung ferner veranlasst wird, ein Konfidenzniveau (79) der Korrosionsschätzung basierend auf den normalisierten Abständen zu bestimmen.

## Revendications

1. Procédé, mis en œuvre par ordinateur, d'estimation de la corrosion d'un matériau d'un véhicule, le procédé comprenant :
la réception (110) de données de corrosion comprenant des points de données de données (25a) de mesure et de données (25b) d'observation ;
la détermination (202, 204, 206, 208, 212) de points de données supplémentaires d'après les données de corrosion et des conditions environnementales à partir d'une date et d'une heure où les données de corrosion ont été observées ;
l'agrégation (214) des données de corrosion et des données supplémentaires en un modèle (35) de données entraîné ;
la réception, en provenance d'un dispositif (70) d'utilisateur, d'une entrée (40) d'utilisateur, l'entrée d'utilisateur comprenant un ou plusieurs paramètres environnementaux (40b) ;
le filtrage (302) du modèle de données entraîné et la génération de points de données restants en retirant les points de données qui ne sont pas liés au(x) paramètre(s) environnemental/environnementaux introduits par l'utilisateur ;
la détermination (306) d'une distance entre les points de données restants et le ou les paramètres environnementaux introduits par l'utilisateur ;
la sélection (312) d'un groupe des points de données restants qui sont les plus proches du ou des paramètres environnementaux introduits par l'utilisateur ;
d'après le groupe des points de données restants, la détermination (104, 322) d'une estimation (77) de corrosion du matériau du véhicule ; et
la transmission (324) d'un affichage (76) de sortie au dispositif d'utilisateur.

2. Procédé selon la revendication 1, comprenant en outre l'application d'une régression non linéaire KNN et la détermination de la distance entre les points de données restants et le ou les paramètres environnementaux.

3. Procédé selon la revendication 1 ou la revendication 2, comprenant en outre la normalisation (304) de distances entre les points de données restants.

4. Procédé selon la revendication 3, comprenant en outre la détermination d'un niveau (79) de confiance de l'estimation de corrosion d'après les distances normalisées.

5. Procédé selon la revendication 4, l'affichage de sortie comprenant le niveau de confiance.

6. Procédé selon l'une quelconque des revendications précédentes, l'estimation de corrosion comprenant un taux de perte de masse par corrosion.

7. Procédé selon l'une quelconque des revendications précédentes, l'affichage de sortie comprenant l'estimation de corrosion et le ou les paramètres environnementaux (78).

8. Procédé selon l'une quelconque des revendications précédentes, l'estimation de corrosion comprenant une densité de courant de corrosion.

9. Procédé selon l'une quelconque des revendications précédentes, la détermination des points de données supplémentaires comprenant :
la sélection d'un des points de données ;
l'obtention (202, 204) des conditions environnementales à partir de la date et de l'heure où les données de corrosion ont été observées ; et
l'interpolation (206) du point de données et des conditions environnementales et la génération (208) des points de données supplémentaires.

10. Procédé selon l'une quelconque des revendications précédentes : les points de données des données de corrosion comprenant des données (25a) de capteurs et des données (25b) d'observation ; et les données de corrosion utilisées dans l'étape de détermination de points de données supplémentaires comprenant uniquement les données (25a) de capteurs.

11. Procédé selon la revendication 10, les données de capteurs comprenant des mesures de capteurs provenant de sites de corrosion exposés.

12. Procédé selon l'une quelconque des revendications précédentes, les données d'observation comprenant des observations provenant d'aéronefs désaffectés et en service.

13. Support (96) lisible par ordinateur comprenant des instructions stockées sur celui-ci qui, lorsqu'elles sont exécutées par une circuiterie (95) de traitement d'un dispositif informatique (90), amènent le dispositif informatique à :
obtenir (100) des données de corrosion comprenant une pluralité de points de données (25) ;
générer des points de données supplémentaires d'après les points de données et des données supplémentaires obtenues à partir d'une ou de plusieurs sources distantes (52) ;
agréger (214) les points de données et les points de données supplémentaires en un modèle (35) de données entraîné ;
recevoir une entrée (40) d'utilisateur d'un ou de plusieurs paramètres environnementaux (40b) ;
filtrer (302) le modèle de données entraîné et retirer les points de données qui ne sont pas liés au(x) paramètre(s) environnemental/environnementaux introduits par l'utilisateur ;
appliquer une régression non linéaire KNN et déterminer un ensemble des points de données issus du modèle (35) de données entraîné filtré qui sont les plus proches du ou des paramètres environnementaux introduits par l'utilisateur ; et
déterminer (104, 322) une estimation (77) de corrosion pour un matériau d'un véhicule d'après l'ensemble des points de données issus du modèle (35) de données entraîné.

14. Support lisible par ordinateur selon la revendication 13, le dispositif informatique étant en outre amené à normaliser (304) les points de données filtrés pour pondérer de manière égale les points de données liés au(x) paramètre(s) environnemental/environnementaux.

15. Support lisible par ordinateur selon la revendication 14, le dispositif informatique étant en outre amené à déterminer un niveau (79) de confiance de l'estimation de corrosion d'après les distances normalisées.
